Europäisches Patentamt

European Patent Office

Office européen des brevets

(19)

(11) Veröffentlichungsnummer: **0 123 260**
A2

# (12) EUROPÄISCHE PATENTANMELDUNG

(21) Anmeldenummer: **84104347.4**

(22) Anmeldetag: **17.04.84**

(51) Int. Cl.³: **B 60 B 7/06**

(30) Priorität: **21.04.83 DE 3314493**

(43) Veröffentlichungstag der Anmeldung:
**31.10.84 Patentblatt 84/44**

(84) Benannte Vertragsstaaten:
**BE FR GB IT SE**

(71) Anmelder: **DR. FRANZ SCHNEIDER GMBH
Kunststoffwerk
Lindenstrasse 10 u. 12
D-8640 Kronach(DE)**

(72) Erfinder: **Reinhard, Siegfried
Haltestelleweg 7
D-8640 Kronach-Neuses(DE)**

(74) Vertreter: **LOUIS, PÖHLAU, LOHRENTZ & SEGETH
Kesslerplatz 1
D-8500 Nürnberg(DE)**

(54) Radkappe.

(57) Eine Radkappe ist mit mehreren, auf einem Kreis mit Abstand zueinander angeordneten, dem Halten an einer Felgenschulter dienenden Befestigungseinrichtungen versehen, die mit einer in der der Radachse zugewandten Felgenschulterfläche ausgebildeten Vertiefung zusammenarbeiten. Jede Befestigungseinrichtung hat eine über einen Unfangsabschnitt eines zur Felgenschulter beabstandeten Kreises sich erstreckende, axial von der Radkappeninnenfläche vorragende Platte, die an ihrer zur Felgenschulter hin gerichteten Fläche mit zwei achsparallelen, in Umfangsrichtung zueinander beabstandeten Konsolen versehen ist. In jeder Konsole ist eine Lagerung für ein als Schieber oder zweiarmiger Hebel ausgebildetes Sperrglied vorgesehen, das in Abhängigkeit von einer axialen, zur Radschüssel hin gerichteten Bewegung der Radkappe mit der Vertiefung in der Felgenschulter zum Rasteingriff kommt.

EP 0 123 260 A2

- 1 -

## Radkappe

Die Erfindung bezieht sich auf eine Radkappe mit mehreren, auf einem Kreis mit Abstand zueinander angeordneten Einrichtungen zur Befestigung der Radkappe an der Schulter einer Felge, die in der der Radachse zugewandten Schulterfläche mit einer zum Felgenhorn axial beabstandeten Vertiefung versehen ist.

Radkappen für Autoräder, die die Radschüssel nach außen hin abschließen, sind in großer Anzahl und in den verschiedensten Ausführungen bekannt. Das wesentliche Problem liegt bei solchen Radkappen in ihrer Befestigung am Rad bzw. an der Felge, da einmal die Gewähr für eine nicht allzu schwierige Montage sowie Demontage, um beispielsweise an die Radmuttern gelangen zu können, und zum anderen für einen festen Sitz der Radkappen im Betrieb - auch nach mehrmaliger Montage und Demontage - gegeben sein muß. Ein weiterer zu beachtender Punkt ist darin zu sehen, Beschädigungen am Rad bei der Montage und Demontage der Radkappen und an diesen selbst weitestgehend auszuschalten. Selbstverständlich wird letzten Endes eine kostengünstige Ausbildung angestrebt.

- 2 -

Radkappen weisen im allgemeinen zu ihrer Befestigung in Umfangsrichtung der Kappe auf einem Kreis liegende, axial vorspringende Federlaschen auf, die an der Felgenschulter zur Anlage gebracht werden, wobei diese Federlaschen mit einer Stahlringfeder oder mit mehreren, ihnen einzeln zugeordneten Federn zusammenarbeiten können. Bei all diesen Konstruktionen ist die Herstellung der Radkappe sowie ihrer Befestigungseinrichtungen relativ kompliziert, es werden mehrere Fertigungsschritte und Montagevorgänge benötigt, wobei letztlich eine Reihe der bekannten Konstruktionen keinen sicheren Halt der Radkappe an der Felge - vor allem nach mehrmaligem An- und Abbau - gewährleistet, da die Befestigungsteile in ihrer Spannung nachlassen oder einem zu starken Abrieb ausgesetzt sind, und wobei beim An- und Abbau Beschädigungen am Rad auftreten. Wenn andererseits ein sicherer Halt geboten wird, so bereitet die Montage der Radkappen schon gewisse Schwierigkeiten, die Demontage ist in vielen Fällen kaum durchführbar; es werden häufig hierzu Schlagwerkzeuge (Hammer od. dgl.) beim Anbringen und - möglicherweise zwei - Hebelwerkzeuge beim Abnehmen benötigt. Solche Werkzeuge rufen im einen wie im anderen Fall Schäden an Rad und/oder Radkappe hervor.

Der Erfindung liegt nunmehr die Aufgabe zugrunde, eine Radkappe der eingangs genannten Art derart auszubilden, daß sie beim Einsetzen in die Felge mit ihr in selbsthaltender Weise verrastet.

Gemäß einer ersten Ausführungsform wird diese Aufgabe dadurch gelöst, daß das Rastelement an dem der Radschüssel zugewandten Hebelarm eines drehbar befestigten doppelarmigen Hebels ausgebildet ist, dessen der Radschüssel abgewandter Hebelarm beim Einsetzen der Radkappe in die Felge derart von der Felgenschulter beaufschlagt wird, daß das Rastelement in selbsthaltender Weise elastisch in die umlaufende Vertiefung gedrückt wird.

Bei einer zweiten Ausführungsform der Erfindung wird die Aufgabe dadurch gelöst, daß das Rastelement an dem der Radschüssel zugewandten Ende eines zweischenkligen, an der Radkappe verschiebbar gelagerten V-förmigen Schiebers angeordnet ist, dessen die Schenkel verbindender Bereich von der Radschüssel entfernt liegt, und daß der eine Schenkel axial in der Radkappe und der andere, das Rastelement tragende Schenkel in einer an der Radkappe ausgebildeten Führung derart geführt ist, daß er bei einer Verschiebung des Schiebers aufgrund seines Anschlags an der Felge beim Einsetzen der Radkappe in die Vertiefung der Felge gedrückt wird, und daß eine Einrichtung zur axialen Verrastung des Schiebers beim Eingreifen des Rastelementes am anderen Schenkel des Schiebers in die Vertiefung der Felge vorgesehen ist.

Bei beiden Ausführungsformen wird in völlig neuartiger Weise die Radkappe in selbsthaltender Weise mit der Felge verrastet.

Weitere Ausbildungen der Erfindung sind in den Unteransprüchen angegeben.

Die Erfindung wird nun an Ausführungsbeispielen und anhand der beiliegenden Zeichnung näher erläutert. In der Zeichnung stellen dar:

- 4 -

Fig. 1  eine Ansicht eines Teils der Innenfläche
einer Radkappe mit der Befestigungseinrichtung gemäß der Erfindung in einer ersten Ausführungsform;

Fig. 2  den Schnitt nach der Linie II - II in der

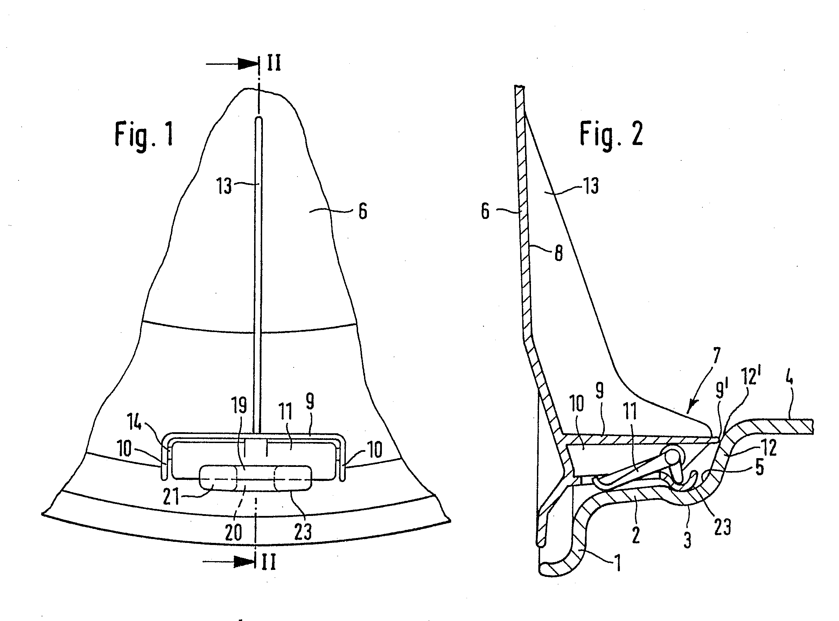

Fig. 1 mit auf einer im Axialschnitt teilweise dargestellten Felge montierter Radkappe;

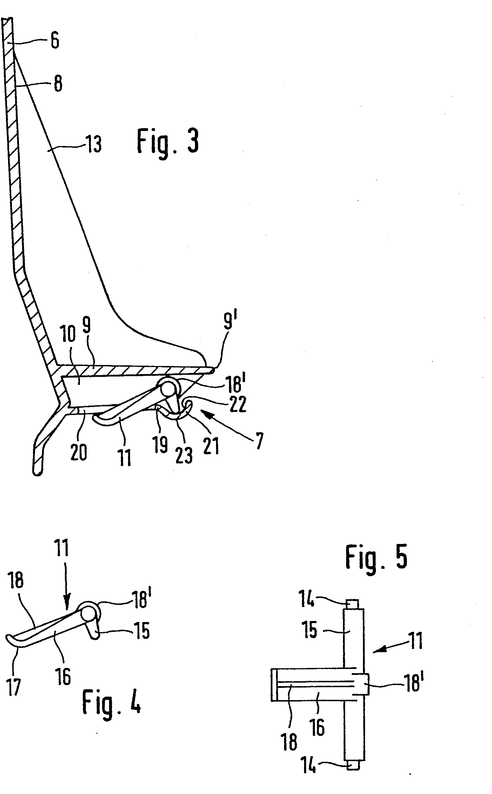

Fig. 3  den Schnitt nach der Linie II - II in der
Fig. 1 vor der Montage der Radkappe auf
der Felge;

Fig. 4  eine Seitenansicht des als zweiarmiger Hebel ausgebildeten Sperrglieds bei der Ausführungsform nach den Fig. 1 bis 3;

Fig. 5 eine Draufsicht auf den in Fig. 4 gezeigten zweiarmigen Hebel;

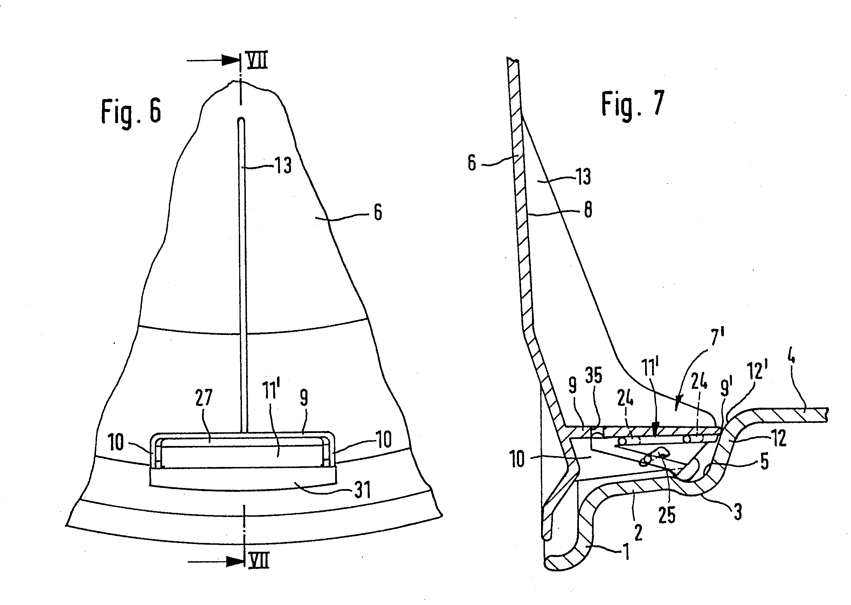

Fig. 6 eine zu Fig. 1 gleichartige Ansicht einer Befestigungseinrichtung in einer zweiten Ausführungsform;

Fig. 7 den Schnitt nach der Linie VII - VII in der Fig. 6,
wobei die Radkappe wiederum auf einer im Axialschnitt
teilweise dargestellten Felge montiert ist.

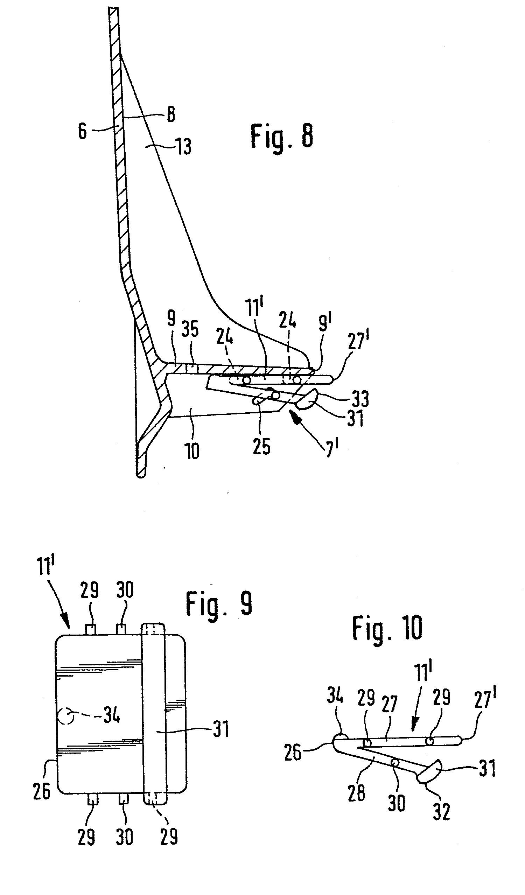

Fig. 8 den Schnitt nach der Linie VII - VII in der Fig. 6
vor der Montage der Radkappe auf der Felge;

Fig. 9 eine Ansicht des bei der zweiten Ausführungsform
zur Anwendung kommenden Schiebers mit Blick auf
die der Felgenschulter zugewandten Flächen;

Fig.10 eine Seitenansicht des in Fig. 9 dargestellten
Schiebers.

Bei der in Fig. 2 und 7 gezeigten Felge handelt es sich
um eine sog. Humpfelge, die ein Felgenhorn 1, eine Felgenschulter 2 mit einem Hump (Buckel) 3 und ein Felgenbett 4
aufweist. Durch den Hump 3 wird in der Felge eine der Radachse zugewandte umlaufende Vertiefung 5 gebildet. Am
Felgenbett 4 ist die die Radachse beinhaltende Radschüssel
befestigt, die durch die Radkappe 6 nach außen abgedeckt
wird.

Um die Radkappe 6 an der Felge zu halten, sind mehrere,
auf einem Kreis, dessen Mittelpunkt von der Rad- bzw.
Radkappenachse gebildet wird, mit Abstand zueinander angeordnete Befestigungseinrichtungen 7 bzw. 7', von denen
die Befestigungseinrichtung 7 in Fig. 3 und die Befestigungseinrichtung 7' in Fig. 8 dargestellt ist, vorgesehen,
und zwar erfindungsgemäß vorzugsweise fünf, die somit einen
Winkelabstand von 72° zueinander haben.

Jede Befestigungseinrichtung 7, 7' besteht aus einer an der der Radschüssel zugewandten Innenfläche 8 der Radkappe 6 angebrachten, in axialer Richtung vorstehenden Platte 9, die auf einem zur Felgenschulter 2 in Richtung zur Radachse hin beabstandeten Kreis liegt und in Umfangsrichtung dieses Kreises eine vorbestimmte Breite hat. Die Platte 9 ist, vorzugsweise an ihren in der Umfangsrichtung gegenüberliegenden Kanten, mit zwei zur Felgenschulter 2 hin gerichteten, zur Radachse parallel verlaufenden Konsolen 10 versehen, die ebenfalls an der Radkappen-Innenfläche 8 angeformt sind, so daß die Konsolen und die Platte einen starren Rahmen bilden. In jeder der Konsolen 10 ist eine Lagerung ausgebildet, in der ein bewegliches Sperrglied 11 bzw. 11' aufgenommen ist, das in Abhängigkeit von einer axialen Einwärtsbewegung der Radkappe mit Bezug zur Felge einen Rasteingriff der Befestigungseinrichtung 7 bzw. 7' mit der Vertiefung 5 in der Felgenschulter 2 herstellt.

Die Platte 9 hat eine solche axiale Erstreckung, daß sie im verrasteten Zustand der Radkappe 6 (vgl. Fig. 2 und 7) mit ihrer der Radschüssel zugewandten Kante 9' an die außenliegende Fläche 12' des das Felgenbett 4 mit der Felgenschulter 2 bzw. dem Hump 3 verbindenden Steges 12 anstößt. Vorzugsweise wird die Platte 9 durch wenigstens eine radial verlaufende und in die Innenfläche 8 der Radkappe 6 übergehende Stützplatte 13 versteift.

Gemäß der in den Fig. 1 bis 5 gezeigten ersten Ausführungsform ist das Sperrglied 11 als zweiarmiger Hebel ausgebildet, der in in den Konsolen 10 ausgebildeten Lageraugen, deren Achsen in einer gemeinsamen, zur Achse der Radkappe senkrechten Umfangsebene liegen, aufgenommen ist. Zu diesem Zweck weist das Sperrglied 11 Lagerzapfen 14 an den Enden des kurzen Hebelarms 15 auf. Der lange Hebelarm 16 und der kurze Hebelarm 15 sind unter einem Winkel von etwa 80° zueinander angeordnet, und das Sperrglied 11 hat in der Draufsicht (Fig. 5) eine T-Form, wobei der kurze Hebelarm 15 den Querbalken des T bildet.

Die die Achsen der Lageraugen bzw. der in diese eingepaßten Lagerzapfen 14 enthaltende Umfangsebene geht im auf die Felge aufgesetzten Zustand der Radkappe durch den dem Felgenhorn 1 zugewandten Rand der Vertiefung 5, d.h. durch den in Fig. 2 die Felgenschulter 2 und den Hump 3 verbindenden Steg.

Der kurze Hebelarm 15 dient der Herstellung des Rasteingriffs in der Vertiefung 5, und zwar entweder unmittelbar oder unter Einschaltung eines Zwischenglieds, was bevorzugt wird. Der lange, zur Radkappen-Innenfläche 8 hin gerichtete Hebelarm 16 ist an seinem freien Ende mit einer konvex gekrümmten Fläche 17 versehen, die bei der Montage der Radkappe an der Felgenschulter 2 zur Anlage kommt. Ferner erhält der lange Hebelarm 16 vorzugsweise eine Versteifungsrippe 18, und in seiner Verlängerung wird auf der dem Ende des kurzen Hebelarms 15 gegenüberliegenden Oberfläche des T-Querbalkens eine an der radial außenliegenden Fläche der Platte 9 abrollende vorragende Kurvenfläche 18' ausgestaltet.

Wie schon erwähnt wurde, stellt das Sperrglied 11 den Rasteingriff vorzugsweise über ein Zwischenglied her. Dazu wird in radialer Richtung außerhalb der Platte 9 eine in axialer Richtung vorstehende Rastlasche 19 an der Radkappen-Innenfläche 8 angeformt, die einen axial gerichteten Schlitz 20 hat, der vom langen Hebelarm 16 durchsetzt wird, so daß dieser auf der Felgenschulter aufliegen kann. Am freien Ende der Rastlasche wird ein rinnenförmiges Teil 21 mit einer konkaven Kehle 22 quer über die Rastlasche 19 ausgebildet, dessen konvexe Fläche 23 mit der Vertiefung 5 in der Felgenschulter 2 zum Rasteingriff kommt.

Der Kreis, auf dem die Rastlaschen 19 liegen, hat einen geringfügig kleineren Durchmesser als der die Felgenschulter 2 bestimmende Kreis, wobei die Rastlaschen mit einer geringen Neigung von der Radkappen-Innenfläche aus zur Radkappenachse hin verlaufen.

Zur Montage der Radkappe 6, deren Ruhestellung in Fig. 3 gezeigt ist, wird diese mit Bezug zur Felge axial in Richtung zur Radschüssel hin gedrückt. Dabei gleitet, wenn vorhanden, das rinnenförmige Teil 21 der Rastlasche 19 auf der Felgenschulter 2 bis kurz vor deren Übergang in die Vertiefung 5, wobei dann schon die konvexe Fläche 17 des langen Hebelarms 16 auf die Felgenschulter gelangt (der Vorgang läuft, wenn die Rastlasche 19 nicht vorhanden ist, sinngemäß mit dem kurzen Hebelarm 15 ab). Durch die auf den langen Hebelarm 16 ausgeübte Druckkraft wird der kurze Hebelarm selbst, wird jedoch vorzugsweise das rinnenförmige Teil 21 der Rastlasche 19 fest in die Vertiefung 5 eingepreßt, so daß die Radkappe 6 eindeutig in der Felge verrastet wird. Die zur Montage anzuwendende Kraft ist geringer als die zur Demontage benötigte Kraft, da in diesem Fall gegen den langen Hebelarm eine Zugkraft aufgewendet werden muß, um das rinnenförmige Rastlaschenteil 23 bzw. den kurzen Hebelarm 15 aus der Vertiefung 5 auf die Felgenschulter 2 zu verlagern.

Bei der in den Fig. 6 bis 10 gezeigten Ausführungsform der Befestigungseinrichtung 7' für die Radkappe 6 ist das den Rasteingriff in der Vertiefung 5 der Felgenschulter 2 sichernde Sperrglied 11' als Schieber ausgebildet.

In diesem Fall sind in jeder Konsole 10 drei Führungsschlitze ausgestaltet, und zwar zwei parallel zur und dicht unterhalb der Platte 9 verlaufende gerade Führungsschlitze 24 sowie ein diesen gegenüber weiter radial auswärts liegender abgewinkelter Führungsschlitz 25, der einen von der Felgenschulter 2 zum Felgenbett 4 hin geneigten längeren und einen entgegengesetzt geneigten, d.h. zur Vertiefung 5 hin gerichteten, kürzeren Schlitzschenkel hat.

Das Sperrglied 11' ist ein zwischen die Konsolen 10 eingesetzter Schieber, der aus zwei an einer Kante 26 zu einer V-Form verbundenen plattenförmigen Schenkeln 27, 28 gebildet ist. Hierbei ist der eine Schenkel 27 länger als der andere Schenkel 28, wobei der längere Schenkel 27 an jeder seiner gegenüberliegenden Seitenkanten zwei Lagerzapfen 29 trägt, während der kürzere Schenkel 28 nur einen Lagerzapfen 30 trägt, und zwar etwa in der Mitte zwischen den Lagerzapfen 29. Die Lagerzapfen 29 sind mit den Führungsschlitzen 24, die Lagerzapfen 30 mit den abgewinkelten Führungsschlitzen 25 in Eingriff.

Der kürzere Schenkel 28 ist an seiner freien, der Kante 26 gegenüberliegenden Kante mit einem eine konvexe Fläche 32 aufweisenden Rastglied 31 versehen, wobei die konvexe Fläche 32 in eine zum achsparallelen Schenkel 27 hin gerichtete schräge oder gerundete Fläche 33 übergeht. Wie Fig. 6 erkennen läßt, ist die konvexe Fläche 32 in ihrer Längserstreckung, d.h. in der zur Kante 26 parallelen Erstreckung, gekrümmt oder ballig ausgebildet, so daß ein zu den beiden Enden oder Seitenkanten des kürzeren Schenkels 28 hin abfallender Verlauf gegeben ist (eine ähnlich ballige Ausbildung kann auch, wie Fig. 1 erkennen läßt, für das rinnenförmige Teil 21 vorgesehen sein).

Der längere Schenkel 27 wird so bemessen, daß er im verrasteten Zustand der Radkappe mit seiner der Radschüssel zugewandten Kante 27' an die Fläche 12' des Steges 12 zwischen Felgenbett 4 und Felgenschulter 2 bzw. Hump 3 anstößt.

Vorzugsweise ist im Bereich der Verbindungsstelle zwischen den beiden Schenkeln 27, 28 auf der Oberfläche des Schenkels 27 eine Rastnase, Warze 34 od. dgl. ausgebildet, die in der gewünschten Endlage der Radkappe 6 mit einer in der Platte 9 ausgebildeten Vertiefung, Bohrung 35 od. dgl. zum Eingriff kommt.

Der horizontale Abstand zwischen den beiden durch die Führungsschlitze 24, 25 bestimmten Endlagen der Lagerzapfen 29, 30 wird nahezu gleich gewählt.

Bei der Montage der Radkappe befindet sich das Sperrglied 11' in der in Fig. 8 gezeigten Lage. Bei einer axialen Bewegung der Radkappe 6 zur Radschüssel hin gleitet die konvexe Fläche 32 des Rastglieds 31 auf der Felgenschulter 2, wodurch der kürzere Schenkel 28 des Schiebers angehoben und der Lagerzapfen 30 im Führungsschlitz 25 zu dessen Scheitelpunkt hin bewegt wird; gleichzeitig verschieben sich die Lagerzapfen 29 in den Führungsschlitzen 24 (nach links in Fig. 8). Wenn die konvexe Fläche 32 am Rast-glied 31 die Übergangsstelle von der Felgenschulter 2 zur Vertiefung 5 erreicht, bewirken die abgewinkelten Führungsschlitze 25 über die Lagerzapfen 30 eine zwangsweise Bewegung des Rastglieds 31 in die Vertiefung 5. Gleichzeitig stoßen die Kanten 9' und 27' gegen die Fläche 12 und tritt die Rastnase 34 in die Vertiefung 35 ein. Damit ist die Radkappe 6 sicher an der Felge befestigt. Zur Demontage ist eine größere Kraft als zur Montage erforderlich, da das Rastglied 31 auf die Höhe der Felgenschulter 2 gegen die elastische Kraft des Schenkels 28, gegen die Reibungskraft und gegen die von den Führungsschlitzen 25 auf die Lagerzapfen 30 ausgeübte Hemmkraft gezogen werden muß. Ferner
ist auch noch der Eingriff der Rastnase 34 mit der Vertiefung 35 zu überwinden.

Wie die Beschreibung erkennen läßt, wird erfindungsgemäß
eine in einem Stück zu fertigende Radkappe geschaffen,
bei der allenfalls die Sperrglieder als besondere Teile
herzustellen sind, deren Eingliederung in die Befestigungseinrichtungen aber keinerlei Schwierigkeiten und Aufwand
aufwirft. Die gesamte Radkappe kann aus Kunststoff gefertigt werden, wobei die Teile einerseits genügend Festigkeit
aufweisen, andererseits an den erforderlichen Stellen ausreichend elastisch sein können, um die an eine Radkappe
und ihre Befestigung gestellten Anforderungen hinsichtlich
einwandfreiem Halt sowie leichter Montage und Demontage
zu erfüllen. Besonders hervorzuheben ist, daß die Verrastung der Befestigungsglieder in der Vertiefung der Felge
bei der axial gerichteten Bewegung der Radkappe zur Radschüssel hin durch Führungen zwangsweise erfolgt und dann
auch aufrechterhalten wird, bis eine Demontage der Radkappe gewünscht wird. Ein unbeabsichtigtes Lösen der
Rastelemente aus dem Rasteingriff ist somit nicht möglich.

Patentansprüche

1. Radkappe mit mehreren, auf einem Kreis mit Abstand zueinander angeordneten Einrichtungen zur Befestigung der Radkappe an der Schulter einer Felge, die in der der Radachse zugewandten Schulterfläche mit einer zum Felgenhorn axial beabstandeten umlaufenden Vertiefung versehen ist, wobei jede Befestigungseinrichtung ein mit der Vertiefung verrastendes Rastelement aufweist, d a d u r c h   g e k e n n z e i c h n e t, daß das Rastelement (19) an dem der Radschüssel zugewandten Hebelarm (15) eines drehbar befestigten doppelarmigen Hebels ausgebildet ist, dessen der Radschüssel abgewandter Hebelarm (16) beim Einsetzen der Radkappe (6) in die Felge derart von der Felgenschulter (2) beaufschlagt wird, daß das Rastelement (19) in selbsthaltender Weise elastisch in die umlaufende Vertiefung (5) gedrückt wird.

2. Radkappe mit mehreren, auf einem Kreis mit Abstand zueinander angeordneten Einrichtungen zur Befestigung der Radkappe an der Schulter einer Felge, die in der der Radachse zugewandten Schulterfläche mit einer zur Felgenschulter axial beabstandeten umlaufenden Vertiefung versehen ist, wobei jede Befestigungseinrichtung ein

- 2 -

mit der Vertiefung verrastendes Rastelement aufweist, dadurch gekennzeichnet, daß das Rastelement (31) an dem der Radschüssel zugewandten Ende eines zweischenkligen, an der Radkappe (6) verschiebbar gelagerten V-förmigen Schiebers (11') angeordnet ist, dessen die Schenkel (27,28) verbindender Bereich von der Radschüssel entfernt liegt, und daß der eine Schenkel (27) axial in der Radkappe und der andere, das Rastelement tragende Schenkel (28) in einer an der Radkappe (6) ausgebildeten Führung (25) derart geführt ist, daß er bei einer Verschiebung des Schiebers aufgrund seines Anschlags an der Felge beim Einsetzen der Radkappe in die Vertiefung (5) der Felge gedrückt wird, und daß eine Einrichtung (34,35) zur axialen Verrastung des Schiebers (11') beim Eingreifen des Rastelementes (31) am anderen Schenkel des Schiebers (28) in die Vertiefung (5) der Felge vorgesehen ist.

3. Radkappe nach Anspruch 1 oder 2, dadurch gekennzeichnet, daß jede Befestigungseinrichtung (7,7') ferner eine über einen Umfangsabschnitt eines zur Felgenschulter (2) beabstandeten Kreises sich erstreckende, axial von der der Radschüssel zugewandten Innenfläche (8) der Radkappe (6) vorragende Platte (9) aufweist, daß die Platte an ihrer zur Felgenschulter hin gerichteten Fläche mit zwei zueinander in Umfangsrichtung der Radkappe beabstandeten achsparallelen Konsolen (10) versehen ist und daß in jeder Konsole eine Lagerung für das als doppelarmiger Hebel oder als V-förmiger Schieber ausgebildete Sperrglied (11) ausgebildet ist.

4. Radkappe nach Anspruch 3, dadurch gekennzeichnet, daß die von der Innenfläche der Radkappe axial vorragende Platte (9) im verrasteten Zustand der Radkappe mit ihrer der Radschüssel zugewandten Kante (9') an der den Übergang von der Felgenschulter (2) zum Felgenbett (4) bildenden Felgenfläche (12') anstößt.

5. Radkappe nach Anspruch 1 und Anspruch 3 oder 4, dadurch gekennzeichnet, daß der zweiarmige Hebel in in den Konsolen (10) ausgebildeten Lageraugen, deren Achsen in einer gemeinsamen, zur Achse der Radkappe senkrechten Umfangsebene liegen, aufgenommen ist, wobei die Hebelarme (15,16) mit einem Winkel von etwa 80° zueinander angeordnet sind.

6. Radkappe nach Anspruch 5, dadurch gekennzeichnet, daß die die Achsen der Lageraugen enthaltende Umfangsebene im auf die Felge aufgesetzten Zustand der Radkappe durch den dem Felgenhorn (1) zugewandten Rand der Vertiefung (5) in der Felgenschulter (2) geht.

7. Radkappe nach Anspruch 5, dadurch gekennzeichnet, daß der zweiarmige Hebel mit unterschiedlich langen Hebelarmen (15,16) ausgebildet ist, wobei der kurze Hebelarm (15) zur Vertiefung (5) in der Felgenschulter hin gerichtet und der lange Hebelarm (16) an seinem freien, der Radkappeninnenfläche(8) zugewandten Ende mit einer konvex gekrümmten, an der Felgenschulter (2) zur Anlage kommenden Fläche (17) versehen ist.

8. Radkappe nach einem der Ansprüche 5 bis 7, dadurch gekennzeichnet, daß der zweiarmige Hebel in der Draufsicht T-förmig ausgebildet ist, wobei der gegenüber dem kurzen Hebelarm (15) schmalere lange Hebelarm (16) einen in von der Radkappeninnenfläche in axialer Richtung vorstehenden, auf einem größeren Kreis als die die Konsolen tragenden Platten (9) sowie zwischen zwei einer Platte zugeordneten Konsolen (10) angebrachten Rastlaschen (19) ausgebildeten Schlitz (20) durchsetzt und der kurze Hebelarm (15) in eine an der freien Innenkante der Rastlasche ausgebildete konkave Kehle (22) eingreift, deren konvexe Außenfläche (23) mit der Vertiefung (5) in der Felgenschulter (2) zum Rasteingriff kommt.

9. Radkappe nach Anspruch 8, dadurch gekennzeichnet, daß der Kreis, auf dem die Rastlaschen (19) liegen, einen geringfügig kleineren Durchmesser als der die Felgenschulter (2) bestimmende Kreis hat.

10. Radkappe nach Anspruch 8 oder 9, dadurch gekennzeichnet, daß die Rastlaschen (19) mit einer zur Radkappenachse hin gerichteten geringfügigen Neigung angeordnet sind.

11. Radkappe nach Anspruch 2 und Anspruch 3 oder 4, dadurch gekennzeichnet, daß der plattenförmige Schenkel (27,28) aufweisende V-förmige Schieber (11') zwischen den Konsolen (10) eingesetzt und mit in den Konsolen ausgebildeten Führungsschlitzen (24,25) aufgenommenen Lagerzapfen (29,30) versehen ist.

12. Radkappe nach Anspruch 11, dadurch gekennzeichnet, daß an jeder Seite des Schiebers drei Lagerzapfen (29,30) vorgesehen sind, die mit je einem Führungsschlitz (24, 25) in einer Konsole (10) in Eingriff sind.

13. Radkappe nach Anspruch 11, dadurch gekennzeichnet, daß der eine Schenkel (27) des V-förmigen Schiebers parallel zu der mit den Konsolen versehenen Platte (9) verläuft, während der andere Schenkel (28) eine von der Radkappeninnenfläche (8) mit Bezug zur Radkappenachse auswärts gerichtete Neigung hat.

14. Radkappe nach Anspruch 13, dadurch gekennzeichnet, daß der auswärts geneigte Schenkel (28) eine kürzere Erstreckung mit Bezug zur Radkappenachse als der achsparallele Schenkel (27) hat und an einer freien Kante mit einer konvexen Fläche (32) versehen ist, die mit der Vertiefung (5) in der Felgenschulter (2) zum Eingriff kommt.

15. Radkappe nach Anspruch 14, dadurch gekennzeichnet, daß der Scheitel der konvexen Fläche (23) in Richtung der freien Kante des kürzeren Schenkels (27) einen gekrümmten, zu den beiden Seitenkanten hin abfallenden Verlauf hat.

16. Radkappe nach Anspruch 14 und 15, dadurch gekennzeichnet, daß der Schieber eine von der konvexen Fläche (32) ausgehende, zum achsparallelen Schenkel (27) hin gerichtete Schrägfläche (33) hat.

17. Radkappe nach einem der Ansprüche 11 bis 16, dadurch gekennzeichnet, daß am achsparallelen Schenkel (27) des Schiebers beidseits zwei zueinander beabstandete Lagerzapfen (29) vorgesehen sind, während am geneigten Schenkel (28) beidseits je ein Lagerzapfen (30) vorgesehen ist, der zwischen den beiden Lagerzapfen (29) des achsparallelen Schenkels liegt.

18. Radkappe nach einem der Ansprüche 11 bis 17, dadurch gekennzeichnet, daß in jeder Konsole (10) zwei achsparallel verlaufende Führungsschlitze (24) für die Lagerzapfen (29) des achsparallelen Schenkels (27) und ein eine Abwinkelung aufweisender Führungsschlitz (25) für je einen Lagerzapfen (30) des geneigten Schenkels (28) ausgebildet sind.

19. Radkappe nach Anspruch 18, dadurch gekennzeichnet, daß der abgewinkelte Führungsschlitz (25) einen eine Neigung von der Felgenschulter (2) zum Felgenbett (4) aufweisenden längeren Schlitzschenkel und einen entgegengesetzt geneigten kürzeren Schlitzschenkel hat.

20. Radkappe nach einem der Ansprüche 11 bis 19, dadurch gekennzeichnet, daß der achsparallele Schenkel (27) des Schiebers mit seiner der Radschüssel zugewandten Kante (27') im verrasteten Zustand der Radkappe an der den Übergang von der Felgenschulter zum Felgenbett bildenden Felgenfläche (12') anstößt.

21. Radkappe nach einem der Ansprüche 11 bis 20, dadurch gekennzeichnet, daß die Einrichtung zur axialen Verrastung des Schiebers im Bereich zwischen der Verbindungsstelle der beiden plattenförmigen Schenkel (27,28) eine zu der mit den Konsolen versehenen Platte (9) vorragende Rastnase (34) aufweist, die im verrasteten Zustand der Radkappe mit einer in der Platte (9) ausgebildeten Vertiefung (35) zum Eingriff kommt.

22. Radkappe nach einem der Ansprüche 3 bis 21, dadurch gekennzeichnet, daß zwischen der von der Radkappen- innenfläche (8) axial vorragenden Platte (9) und
dieser Innenfläche wenigstens eine radial verlaufende Stützplatte (13) angeordnet ist.

23. Radkappe nach einem der Ansprüche 3 bis 22, dadurch
gekennzeichnet, daß die Radkappe (6) und sämtliche
Teile der Befestigungseinrichtung (7,7') aus einem
Kunststoffmaterial bestehen.

Fig. 1

Fig. 2

0123260

Fig. 3

Fig. 5

Fig. 4

Fig. 7

Fig. 6

Fig. 8

Fig. 9

Fig. 10